# EUROPÄISCHE PATENTSCHRIFT

(11) **EP 2 696 483 B1**
(45) Veröffentlichungstag und Bekanntmachung des Hinweises auf die Patenterteilung: **15.11.2017**
(21) Anmeldenummer: 12005713.8
(22) Anmeldetag: 07.08.2012
(51) Int. Cl.: H02K 7/102

(54) **Elektromotor mit Abschaltbremse**
Electric motor with deactivation brake
Moteur électrique avec frein d'arrêt

(43) Veröffentlichungstag der Anmeldung: 12.02.2014
(73) Patentinhaber: Viking GmbH, 6336 Langkampfen (AT)
(72) Erfinder: Gottinger, Clemens, 6320 Angerberg (AT); Sonnerer, Roland, 6334 Schwoich (AT); Steger, Patrick, 6336 Langkampfen (AT)
(74) Vertreter: Wasmuth, Rolf

(56) Entgegenhaltungen:
- EP-A2- 1 434 332
- DE-A1- 4 033 213
- DE-A1- 10 060 925

## Beschreibung

Die Erfindung betrifft einen Elektromotor mit einem zwischen dem Rotor und einem Lagerschild des Elektromotors angeordneten Bremselement nach dem Oberbegriff des Anspruchs 1.

Ein derartiger Elektromotor ist aus der DE 34 07 731 A1 bekannt. Die Rotorwelle des Rotors ist in einem Lager gehalten, welches in einem Lagerschild des Stators aufgenommen ist. Zwischen dem Lagerschild und dem Rotor ist ein Bremselement angeordnet, welches von der Rotorwelle durchragt ist und bei ausgeschaltetem Motor von einer Feder zur reibschlüssigen Anlage an Bremsflächen des Lagerschildes kraftbeaufschlagt ist. Das Bremselement zeigt Keilelemente, die mit Keilelementen an der Stirnseite des Rotors zusammenwirken, wobei sich im Bremsfall der Rotor relativ zum Bremselement verdreht und die Keilflächen der Keilelemente aufeinander auflaufen und eine axiale Keilkraft aufbauen, die das Bremselement stärker auf die Bremsfläche aufdrückt. Dabei können die Keilflächen der Keilelemente bereits beim Verschieben des Bremselementes in Richtung auf die Bremsfläche miteinander in Eingriff treten.

Die DE 100 60 925 A1 zeigt einen Asynchronmotor mit Bremse. Der Asynchronmotor umfasst ein Schild, an welchem Bremsbeläge befestigt sind. Gegenüberliegend zu den Bremsbelägen ist ein Bremsbecher angeordnet. Der Bremsbecher umgreift einen Kurzschlussring. Zwischen dem Bremsbecher und dem Ende des Rotors ist in axialer Richtung ein Spalt vorhanden.

Die Keilelemente, die das Bremselement mit einer Stellkraft beaufschlagende Feder und auch das Lager des Bremselementes auf der Rotorwelle sind äußeren Verschmutzungen wie dem Bremsabrieb ausgesetzt, weshalb die Funktionselemente des Bremssystems mit steigenden Betriebsstunden Schmutz anlagern und bis zu einem eventuellen Totalausfall schwergängiger werden.

Der Erfindung liegt die Aufgabe zugrunde, einen Elektromotor mit einem zwischen dem Rotor und einem Lagerschild des Elektromotors angeordneten Bremselement derart auszubilden, dass über einen langen Betriebszeitraum eine störungsfreie Funktion des Bremselementes gewährleistet ist.

Die Aufgabe wird erfindungsgemäß nach den kennzeichnenden Merkmalen des Anspruchs 1 gelöst.

Das Bremselement ist ein mit geschlossenen Wandungen ausgeführter Bremstopf, der das Ende des Rotors übergreift. Die Keilelemente liegen innerhalb des mit geschlossenen Wandungen ausgeführten Bremstopfes, so dass die Funktionselemente des Bremssystems gegen Verschmutzung von außen geschützt sind. Dadurch wird gewährleistet, dass das Bremssystem auch nach einer Vielzahl von Betriebsstunden funktionssicher arbeitet, da kaum Ablagerungen an den Funktionselementen des Bremstopfes und auf der Stirnseite des Rotors auftreten können. Der Bremstopf weist eine zentrale Nabe auf, die auf der Rotorwelle geführt ist. Dadurch wird eine funktionssichere Führung des Bremstopfes auf der Rotorwelle erreicht. Die zentrale Nabe ist insbesondere als Gleitlager ausgebildet. Die Feder liegt zwischen der Nabe und der Umfangswand des Bremstopfes.

Um den Innenraum des Bremstopfes sicher gegen äußere Verschmutzung abzudichten, ist vorgesehen, die Umfangswand des Bremstopfes und das Ende des Rotors in allen Stellungen des Bremstopfes überlappend auszulegen.

Die Nabe erstreckt sich vorzugsweise über die gesamte Höhe des Bremstopfes, so dass ein Kippen des Bremstopfes auf der Rotorwelle im Wesentlichen unterbunden ist. Aufgrund der Länge der Nabe können im Falle einer Bremsung auftretende Querkräfte sicher abgefangen werden.

Es kann zweckmäßig sein, die Nabe des Bremstopfes aus dem Boden des Bremstopfes in Richtung auf das Lagerschild vorstehen zu lassen, wodurch das vorstehende Ende der

Nabe in einfacher Weise einen Anschlag zur Wegbegrenzung des Bremselementes anfahren kann.

Die Nabe kann innerhalb des Bremstopfes enden, ist aber vorteilhaft länger als die Höhe der Umfangswand des Bremstopfes gestaltet, so dass aufgrund ihrer Länge eine gute Tragfähigkeit als Lager gegeben ist.

Der axiale Verschiebeweg der Nabe und damit die maximale Axialbewegung des Bremstopfes selbst ist durch Anschläge begrenzt. Dabei wird ein erster Anschlag durch den Rotor selbst und ein zweiter Anschlag durch das Lagerschild des Elektromotors gebildet. Dabei kann der zweite Anschlag zweckmäßig durch ein im Lagerschild gehaltenes Lager der Rotorwelle gebildet sein. Hierzu ist zwischen dem Lager und dem Bremselement bzw. dem vorstehenden Ende der Nabe vorteilhaft ein Anschlagtopf vorgesehen, in den das Ende der Nabe einragt. Der Anschlagtopf stützt sich dabei am Lager ab.

Die Feder ist bevorzugt im Innenraum des Bremstopfes derart angeordnet, dass sie zwischen der Nabe und der Umfangswand des Bremstopfes liegt, vorzugsweise innerhalb eines Aufnahmeraums einer Ringausnehmung in der Stirnseite des Rotors. Auch im Bereich der Feder und der Stirnseite des Rotors treten kaum Ablagerungen auf.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: in schematischer Darstellung einen Teilschnitt durch ein Ende eines Elektromotors,
- Fig. 2: in schematischer Darstellung eine perspektivische Darstellung auf das Ende eines Rotors in einem Elektromotor nach Fig. 1.

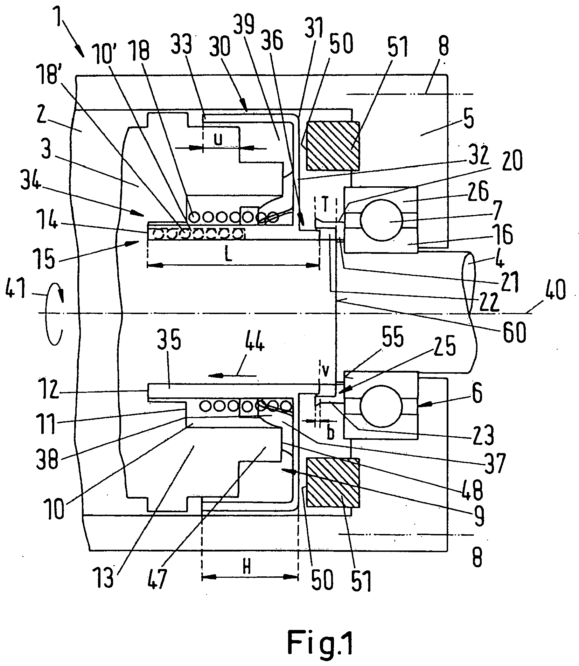

Der in Fig. 1 in Teildarstellung gezeigte Elektromotor 1 besteht im Wesentlichen aus einem Stator 2 und einem Rotor 3, dessen Rotorwelle 4 in endseitigen Lagerschildern des Stators 2 drehbar gelagert ist. In Fig. 1 ist ein Lagerschild 5 gezeigt, in dem ein Ende der Rotorwelle 4 in einem Lager 6 gehalten ist. Das Lager 6 ist ein Wälzlager in Form eines Kugellagers und weist einen Innenring 16 sowie einen Außenring 26 auf, zwischen denen Kugeln 7 als Wälzkörper gehalten sind. Die Rotorwelle 4 stützt sich mit einer Schulter 55 am Innenring 16 des Lagers 6 ab.

Der Lagerschild 5 ist mittels nicht näher dargestellten Befestigungen 8 stirnseitig am vorteilhaft zylindrischen Stator 2 festgelegt, insbesondere verschraubt.

Zwischen dem Rotor 3 und dem Lagerschild 5 ist ein Bremselement 30 angeordnet, welches im gezeigten Ausführungsbeispiel als Bremstopf 31 mit einem Boden 32 und einer Umfangswand 33 ausgebildet ist. Der Bremstopf 31 weist ferner eine zentrale Nabe 35 auf, die auf der Rotorwelle 4 geführt ist. Die zentrale Nabe 35 bildet ein Gleitlager auf der Rotorwelle 4 und erstreckt sich über die gesamte Höhe H des Bremstopfes 31, so dass eine im Wesentlichen spielfreie, sichere axiale Führung des Bremstopfes 31 auf der Rotorwelle 4 gegeben ist.

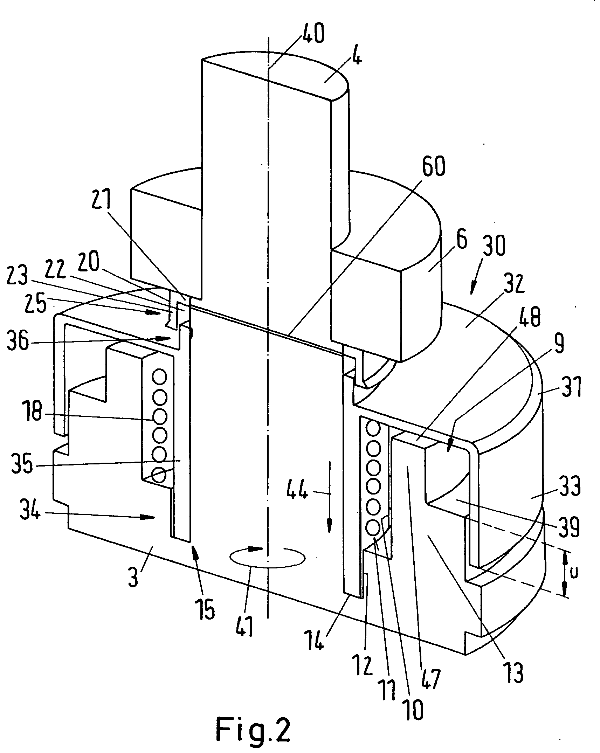

Wie die Figuren 1 und 2 zeigen, ist die axiale Länge L der Nabe 35 im gezeigten Ausführungsbeispiel länger als die Höhe H des Bremstopfes 31 ausgeführt, insbesondere länger als die Höhe H der Umfangswand 33 des Bremstopfes 31. Durch die große axiale Länge L ist eine gute Tragfähigkeit bei kleiner Flächenbelastung gewährleistet. Es kann zweckmäßig sein, wenn die Nabe 35 innerhalb des Bremstopfes 31 endet oder kürzer als die axiale Länge des Bremstopfes 31 ausgeführt ist.

An ihrem einen, dem Rotor 3 zugewandten Ende 34 steht die Nabe 35 aus dem Bremstopf 31 vor; an ihrem anderen Ende 36 ragt die Nabe 35 aus dem Boden 32 des Bremstopfes 31 heraus. Die Nabe 35 steht also an beiden axialen Enden 34 und 36 aus dem Bremstopf 31 heraus.

In der Stirnseite 9 des Rotors 3 ist nahe der Rotorwelle 4 eine Ringausnehmung 10 ausgebildet, in der die Nabe 35 liegt. Im Boden 11 der Ringausnehmung 10 ist eine das Ende 34 der Nabe 35 aufnehmende Ringvertiefung 12 vorgesehen, die der Wandstärke der Nabe 35 angepasst gestaltet ist und deren Boden 14 einen Anschlag 15 für den Verschiebeweg v der Nabe 35 bildet. Es kann zweckmäßig sein, die Ringvertiefung 12 breiter als die Wandstärke der Nabe 35 auszuführen, vorteilhaft so groß wie die Ringausnehmung 10 selbst, wie in punktierter Linie in Fig. 1 oben links dargestellt ist.

Das andere Ende 36 der Nabe ragt in einen Anschlagtopf 20, dessen Boden 21 von der Rotorwelle 4 durchragt ist und dessen Öffnung 22 dem Ende 36 der Nabe 35 zugewandt liegt. Der Anschlagtopf 20 stützt sich in der einen Axialrichtung am Lagerschild 5 ab, im gezeigten Ausführungsbeispiel stützt sich der Anschlagtopf 20 über das Lager 6 am Lagerschild 5 ab. Wie Fig. 1 zeigt, liegt der Boden 21 des Anschlagtopfes 20 axial am Innenring 16 des Lagers 6 an, wodurch die Abstützung am Lagerschild 5 gewährleistet ist. In der anderen Axialrichtung liegt der Anschlagtopf 20 mit seinem Boden 21 an einer Ringschulter 60 der Rotorwelle 4 an, so dass der Anschlagtopf 20 zwischen dem Ringanschlag 60 und dem Innenring 16 des Lagers 6 sicher gehalten ist.

Der Bremstopf 31 übergreift die Stirnseite 9 des Rotors 3, wobei die Umfangswand 33 das Ende 13 des Rotors 3 überlappt. Die Überlappung u ist am größten, wenn der Bremstopf in seiner am Rotor 3 angezogenen Stellung gemäß Fig. 1 liegt, in der das Ende 34 der Nabe 35 am Anschlag 15, d. h. am Boden 14 der Ringvertiefung 12 anliegt. In der anderen, nicht angezogenen Stellung kann sich der Bremstopf 31 bei zunehmendem Verschleiß der im Lagerschild 5 gehaltenen Bremskörper 51 so weit verlagern, bis das aus dem Boden 32 in Richtung auf das Lagerschild 5 vorstehende Ende 36 der Nabe 35 am Boden 21 des Anschlagtopfes 20 anstößt. Der Boden 21 des Anschlagtopfes 20 bildet einen weiteren Anschlag 25 für die Nabe 35 bzw. für den Bremstopf 31. Zwischen den Anschlägen 15 und 25 kann sich der Bremstopf 31 maximal bewegen; dieser maximale Verschiebeweg ist mit v bezeichnet.

Die Überlappung u ist derart bemessen, dass bei einer Lage des Bremstopfes 31 sowohl am ersten Anschlag 15 als auch am zweiten Anschlag 25 eine Überdeckung zwischen dem Ende 13 des Rotors 3 und der Umfangswand 33 des Bremstopfes 31 gegeben ist. Entsprechend ist die Tiefe T des Anschlagtopfes 20 derart bemessen, dass das freie Ende 36 der Nabe 35 mit der Umfangswand 23 des Anschlagtopfes 20 eine Überdeckung b aufweist, die auch dann noch besteht, wenn die Nabe 35 am ersten Anschlag 15 anliegt.

Zwischen dem Boden 11 der Ringausnehmung 10 und dem Boden 32 des Bremstopfes 31 ist eine Feder 18 angeordnet, die im Ausführungsbeispiel als Schraubenfeder gestaltet ist. Die Feder 18 liegt mit dem einen Ende auf dem Boden 11 in der Ringausnehmung 10 auf und mit dem anderen Ende am Boden 32 des Bremstopfes 31 an. Wird die Ringvertiefung 12 breiter ausgeführt, z. B. bis zur Mantelfläche der Ringausnehmung 10, kann sich die Feder 18 auch auf dem Boden 14 der Ringvertiefung 12 anstelle des Bodens 11 abstützen.

Wie in Fig. 1 gezeigt, liegt die Feder 18 somit innerhalb des Bremstopfes 31, also im Innenraum des Bremstopfes 31. Vorteilhaft ist die Feder 18 zwischen der Nabe 35 und der Umfangswand 33 angeordnet, insbesondere im Raumbereich der Ringausnehmung 10. Zweckmäßig liegt die als Schraubenfeder ausgebildete Feder 18 koaxial zur Nabe 35.

In einer alternativen Ausführungsform kann die Feder 18' auch in einem Ringraum 10' zwischen einer Teillänge der Nabe 35 und dem Rotor 3 bzw. der Rotorwelle 4 angeordnet werden, wie in Fig. 1 oben links strichliert dargestellt ist.

Ist der Elektromotor 1 eingeschaltet und dreht die Rotorwelle 4 um die Drehachse 40 z. B. in Pfeilrichtung 41, wird aufgrund des elektromagnetischen Flusses des Elektromotors 1, der auch den aus magnetisierbarem Material bestehenden Bremstopf 31 durchsetzt, in Pfeilrichtung 44 gegen die Stirnseite 9 des Rotors 3 angezogen, bis das Ende 34 der Nabe 35 am Anschlag 15 anliegt. Die Verschiebung des Bremstopfes 31 auf der Rotorwelle 4 in Pfeilrichtung 44 erfolgt gegen die Kraft der Feder 18. In der in Fig. 1 dargestellten Betriebsstellung rotiert der Bremstopf 31 zusammen mit dem Rotor 3 um die Drehachse 40.

Dem Boden 32 des Bremstopfes 31 liegt am Lagerschild 5 eine Bremsfläche 50 gegenüber, die im gezeigten Ausführungsbeispiel durch die Bremskörper 51 ausgebildet ist, die im Lagerschild 5 fixiert sind. Der Bremskörper 51 kann als Bremsring gestaltet sein oder aus einzelnen Teilringsegmenten, die in Drehrichtung des Bremstopfes 31 mit Abstand zueinander liegen.

Auf der Stirnseite 9 des Rotors 3 sind Keilelemente 47 vorgesehen, wobei in Umfangsrichtung des Rotors mehrere mit Abstand zueinander liegende Keilelemente 47 vorgesehen sind. Vorteilhaft sind die Keilelemente 47 symmetrisch ausgebildet, d. h., in beiden Drehrichtungen des Rotors ist eine Keilfläche 48 ausgebildet. Jedem Keilelement 47 des Rotors 3 ist ein inneres Keilelement 37 am Boden 32 des Bremstopfes 31 zugeordnet. Die Keilelemente 37 und 47 haben in Umfangsrichtung des Rotors 3 ansteigende, bzw. abfallende Keilflächen, wobei die im Ausführungsbeispiel gezeigten Keilflächen 48 in der einen Drehrichtung 41 abfallen, während die Keilflächen 38 der Keilelemente 37 des Bremstopfes 31 in der Drehrichtung 41 ansteigen. Die Keilflächen 38, 48 der Keilelemente 37, 47 sind einander komplementär ausgebildet und überlappen einander axial. Entsprechend sind an den Keilelementen 37, 47 nicht näher dargestellte Keilflächen ausgebildet, die bei Abbremsen eines entgegen der Drehrichtung 41 rotierenden Rotors 4 miteinander in Eingriff treten.

Wird der Elektromotor 1 ausgeschaltet, verschiebt sich der Bremstopf 31 unter der Kraft der Feder 18 entgegen Pfeilrichtung 44 über einen Verschiebeweg v, bis der Boden 32 des Bremstopfes 31 an der Bremsfläche 50 des Lagerschildes 5 zu Anlage kommt; der Bremstopf 31 wird abgebremst. Da der Bremstopf 31 auf der Rotorwelle 4 mit der Nabe 35 als Gleitlager gelagert ist, dreht sich bei langsamer werdendem Bremstopf 31 die Rotorwelle 4 bzw. der Rotor 3 relativ zum Bremstopf 31 so weit, bis die komplementären Keilflächen 38 und 48 der Keilelemente 37 und 47 aufeinander gleiten und durch den Eingriff eine axiale Keilkraft entgegen Pfeilrichtung 44 aufbauen, durch die der Bremstopf 31 noch stärker an die Bremsflächen 50 angedrückt wird und somit noch stärker verzögert. Da der Rotor 3 über die Keilelemente 37, 47 in Drehrichtung 41 in drehfestem Eingriff mit dem Bremstopf 31 steht, erfolgt eine Abbremsung des Rotors 3 selbst bis zum Stillstand. Eine in Drehrichtung 41 rotierende Rotorwelle 4 wird somit bei Abschalten des Erregerstroms des Elektromotors 1 durch den Bremstopf 31 über die Bremsflächen 50 am Lagerschild 5 bis zum Stillstand rasch abgebremst. Bei einer Rotation des Rotor 3 entgegen der Drehrichtung 41 erfolgt eine entsprechende Bremsung durch andere Keilflächen.

Der Bremstopf 31 hat geschlossene Wandungen, d. h. die Umfangswand 33 wie der Boden 32 bilden geschlossene Flächen, so dass kein Schmutz, Bremsabrieb oder dgl. in das Innere des Bremstopfes 31 gelangen kann. Da die Umfangswand 33 in allen Stellungen des Bremstopfes 31 das Ende 13 des Rotors 3 überlappt, ist ein im Wesentlichen geschlossener Bremstopf 31 erzielt, dessen Innenraum 39 gegenüber der Umgebung weitgehend abgedichtet ist. Dabei erfolgt die Abdichtung im Bereich der Überlappung u durch eine Spaltdichtung; entsprechend ist durch die Überlappung b des Anschlagtopfes 20 mit dem Ende 36 der Nabe 35 eine Labyrinthdichtung ausgebildet, so dass ein Eintreten von Schmutz, Abrieb und dgl. im Bereich der Nabe 35 ebenfalls weitgehend vermieden ist.

Alle wesentlichen Funktionselemente des Bremssystems liegen im geschützten Innenraum 39 des Bremstopfes 31.

Der Bremstopf 31 kann aus einzelnen Elementen zusammengefügt, also gebaut werden, oder - wie im Ausführungsbeispiel gezeigt - als einteiliges Bauteil gefertigt sein, z. B. als Gussteil hergestellt sein oder als Tiefziehteil gefertigt sein.

## Patentansprüche

1. Elektromotor mit einem zwischen dem Rotor (3) und einem Lagerschild (5) des Elektromotors (1) angeordneten Bremselement (30), welches im Betrieb des Elektromotors (1) vom elektromagnetischen Fluss des Elektromotors (1) durchflossen und axial gegen die Kraft einer Feder (18) an die Stirnseite (9) des Rotors (3) magnetisch angezogen wird und mit dem Rotor (3) rotiert, wobei das Bremselement (30) auf der Rotorwelle (4) geführt und relativ zur Rotorwelle (4) um einen Drehwinkel drehbar ist, und mit einer am Lagerschild (5) ausgebildeten Bremsfläche (50) ausgestattet ist, an die beim Ausschalten des Elektromotors (1) das Bremselement (30) unter der Wirkung der Feder (18) axial angedrückt wird, sowie mit zwischen dem Bremselement (30) und dem Rotor (3) angeordneten Keilelementen (37, 47) ausgestattet ist, die bei Drehung des Rotors (3) relativ zum Bremselement (30) aufeinander aufgleiten und eine axiale Keilkraft erzeugen, die die Anlagekraft des Bremselementes (30) auf der Bremsfläche (50) erhöht, wobei das Bremselement (30) ein mit geschlossenen Wandungen ausgeführter Bremstopf (31) ist, und die Keilelemente (37, 47) innerhalb des geschlossenen Bremstopfes (31) liegen,
**dadurch gekennzeichnet, dass** der Bremstopf (31) das Ende (13) des Rotors (3) übergreift, dass der Bremstopf (31) eine zentrale Nabe (35) aufweist, die auf der Rotorwelle (4) geführt ist, und dass die Feder (18) zwischen der Nabe (35) und der Umfangswand (33) des Bremstopfes (31) liegt.

2. Elektromotor nach Anspruch 1,
**dadurch gekennzeichnet, dass** eine Umfangswand (33) des Bremstopfes (31) und das Ende (13) des Rotors (3) in allen Stellungen des Bremstopfes (31) einander überlappen.

3. Elektromotor nach Anspruch 1,
**dadurch gekennzeichnet, dass** die Nabe (35) ein Gleitlager bildet.

4. Elektromotor nach einem der Ansprüche 1 bis 3,
**dadurch gekennzeichnet, dass** sich die Nabe (35) über die gesamte Höhe (H) des Bremstopfes (31) erstreckt.

5. Elektromotor nach einem der Ansprüche 1 bis 4,
**dadurch gekennzeichnet, dass** die Nabe (35) aus dem Boden (32) des Bremstopfes (31) in Richtung auf das Lagerschild (5) vorsteht.

6. Elektromotor nach einem der Ansprüche 1 bis 5,
**dadurch gekennzeichnet, dass** die Nabe (35) länger als die Höhe (H) der Umfangswand (33) des Bremstopfes (31) ist.

7. Elektromotor nach einem der Ansprüche 1 bis 6,
**dadurch gekennzeichnet, dass** der axiale Verschiebeweg (v) der Nabe (35) durch Anschläge (15, 25) begrenzt ist.

8. Elektromotor nach Anspruch 7,
**dadurch gekennzeichnet, dass** ein erster Anschlag (15) durch den Rotor (3) und ein zweiter Anschlag (25) durch das Lagerschild (5) gebildet ist.

9. Elektromotor nach Anspruch 8,
**dadurch gekennzeichnet, dass** der zweite Anschlag (25) durch ein im Lagerschild (5) gehaltenes Lager (6) der Rotorwelle (4) gebildet ist.

10. Elektromotor nach Anspruch 9,
**dadurch gekennzeichnet, dass** zwischen dem Lager (6) und dem Bremstopf (31) ein Anschlagtopf (20) vorgesehen ist, in den ein Ende der Nabe (35) einragt.

11. Elektromotor nach Anspruch 10,
**dadurch gekennzeichnet, dass** die Umfangswand (23) des Anschlagtopfes (20) in allen Stellungen des Bremstopfes (31) das einragende Ende (36) der Nabe (35) überlappt.

12. Elektromotor nach einem der Ansprüche 1 bis 11,
**dadurch gekennzeichnet, dass** die Feder (18) innerhalb der geschlossenen Wandungen des Bremstopfes (31) liegt

13. Elektromotor nach einem der Ansprüche 1 bis 12,
**dadurch gekennzeichnet, dass** die Feder (18) zwischen der Nabe (35) und dem Rotor (3) angeordnet ist.

## Claims

1. Electric motor comprising a brake element (30) located between the rotor (3) and an end bracket (5) of the electric motor (1), through which brake element (30) the electromagnetic flux of the electric motor (1) passes during the operation of the electric motor (1) and which brake element (30) is magnetically attracted to the end face (9) of the rotor (3) against the force of a spring (18) and rotates with the rotor (3), wherein the brake element (30) is guided on the rotor shaft (4) and is rotatable by a rotational angle relative to the rotor shaft (4) and wherein the brake element (30) is provided with a brake-contact surface (50), which is formed on the end bracket (5) and against which the brake element (30) is axially pressed under the action of the spring (18) when the electric motor (1) is switched off, and wherein the brake element (30) is provided with wedge elements (37, 47), which are located between the brake element (30) and the rotor (3) and which, while the rotor (3) is rotating, slide on one another relative to the brake element (30) and generate an axial wedge force which increases the contact force of the brake element (30) on the brake-contact surface (50), wherein the brake element (30) is a brake pot (31) designed with closed walls and the wedge elements (37, 47) lie within the closed brake pot (31),
**characterised in that** the brake pot (31) overlaps the end (13) of the rotor (3), **in that** the brake pot (31) has a central hub (35), which is guided on the rotor shaft (4), and **in that** the spring (18) is located between the hub (35) and the circumferential wall (33) of the brake pot (31).

2. Electric motor according to claim 1,
**characterised in that** a circumferential wall (33) of the brake pot (31) and the end (13) of the rotor (3) overlap one another in all positions of the brake pot (31).

3. Electric motor according to claim 1,
**characterised in that** the hub (35) forms a plain bearing.

4. Electric motor according to any of claims 1 to 3,
**characterised in that** the hub (35) extends along the entire height (H) of the brake pot (31).

5. Electric motor according to any of claims 1 to 4,
**characterised in that** the hub (35) projects from the base (32) of the brake pot (31) towards the end bracket (5).

6. Electric motor according to any of claims 1 to 5,
**characterised in that** the hub (35) is longer than the height (H) of the circumferential wall (33) of the brake pot (31).

7. Electric motor according to any of claims 1 to 6,
**characterised in that** the axial traverse (v) of the hub (35) is limited by stops (15, 25).

8. Electric motor according to claim 7,
**characterised in that** a first stop (15) is represented by the rotor (3) and a second stop (25) is represented by the end bracket (5).

9. Electric motor according to claim 8,
**characterised in that** the second stop (25) is represented by a bearing (6) of the rotor shaft (4) which is held in the end bracket (5).

10. Electric motor according to claim 9,
**characterised in that** a stop pot (20), into which an end of the hub (35) projects, is provided between the bearing (6) and the brake pot (31).

11. Electric motor according to claim 10,
**characterised in that** the circumferential wall (23) of the stop pot (20) overlaps the projecting end (36) of the hub (35) in all positions of the brake pot (31).

12. Electric motor according to any of claims 1 to 11,
**characterised in that** the spring (18) is located within the closed walls of the brake pot (31).

13. Electric motor according to any of claims 1 to 12,
**characterised in that** the spring (18) is located between the hub (35) and the rotor (3).

## Revendications

1. Moteur électrique avec un élément de freinage (30) qui est disposé entre le rotor (3) et un flasque (5) du moteur électrique (1) et qui, lors du fonctionnement du moteur électrique (1), est traversé par le flux électromagnétique de celui-ci et est attiré magnétiquement, axialement, vers le côté frontal (9) du rotor (3) à l'encontre de la force d'un ressort (18) et tourne avec le rotor (3), ledit élément de freinage (30) étant guidé sur l'axe de rotor (4) et étant apte à tourner suivant un angle de rotation par rapport audit axe de rotor (4), et étant pourvu d'une surface de freinage (50) qui est formée sur le flasque (5) et contre laquelle, lors de l'arrêt du moteur électrique (1), l'élément de freinage (30) est pressé axialement sous l'action du ressort (18), et étant pourvu d'éléments formant coins (37, 47) qui sont disposés entre l'élément de freinage (30) et le rotor (3) et qui, lors de la rotation du rotor (3), glissent l'un sur l'autre par rapport à l'élément de freinage (30) et génèrent une force de coincement axiale qui augmente la force d'application de l'élément de freinage (30) sur la surface de freinage (50), l'élément de freinage (30) étant un pot de freinage (31) avec des parois fermées, et les éléments formant coins (37, 47) se trouvant à l'intérieur du pot de freinage (31) fermé,
**caractérisé en ce que** le pot de freinage (31) couvre l'extrémité (13) du rotor (3), **en ce que** le pot de freinage (31) présente un moyeu central (35) qui est guidé sur l'axe de rotor (4), et **en ce que** le ressort (18) se trouve entre le moyeu (35) et la paroi périphérique (33) du pot de freinage (31).

2. Moteur électrique selon la revendication 1,
**caractérisé en ce qu'**une paroi périphérique (33) du pot de freinage (31) et l'extrémité (13) du rotor (3) se recouvrent dans toutes les positions du pot de freinage (31).

3. Moteur électrique selon la revendication 1,
**caractérisé en ce que** le moyeu (35) forme un palier à glissement.

4. Moteur électrique selon l'une des revendications 1 à 3,
**caractérisé en ce que** le moyeu (35) s'étend sur toute la hauteur (H) du pot de freinage (31).

5. Moteur électrique selon l'une des revendications 1 à 4,
**caractérisé en ce que** le moyeu (35) dépasse du fond (32) du pot de freinage (31) en direction du flasque (5).

6. Moteur électrique selon l'une des revendications 1 à 5,
**caractérisé en ce que** le moyeu (35) est plus long que la hauteur (H) de la paroi périphérique (33) du pot de freinage (31).

7. Moteur électrique selon l'une des revendications 1 à 6,
**caractérisé en ce que** la course axiale (v) du moyeu (35) est limitée par des butées (15, 25).

8. Moteur électrique selon la revendication 7,
**caractérisé en ce qu'**une première butée (15) est formée par le rotor (3), et une seconde butée (25) par le flasque (5).

9. Moteur électrique selon la revendication 8,
**caractérisé en ce que** la seconde butée (25) est formée par un palier (6) de l'axe de rotor (4) qui est contenu dans le flasque (5).

10. Moteur électrique selon la revendication 9,
**caractérisé en ce qu'**il est prévu entre le palier (6) et le pot de freinage (31) un pot de butée (20) dans lequel dépasse une extrémité du moyeu (35).

11. Moteur électrique selon la revendication 10,
**caractérisé en ce que** la paroi périphérique (23) du pot de butée (20), dans toutes les positions du pot de freinage (31), couvre l'extrémité (36) du moyeu (35) qui dépasse.

12. Moteur électrique selon l'une des revendications 1 à 11,
**caractérisé en ce que** le ressort (18) se trouve à l'intérieur des parois fermées du pot de freinage (31).

13. Moteur électrique selon l'une des revendications 1 à 12,
**caractérisé en ce que** le ressort (18) est disposé entre le moyeu (35) et le rotor (3).
